# EUROPEAN PATENT SPECIFICATION

(11) **EP 1 726 553 B1**
(45) Date of publication and mention of the grant of the patent: **02.06.2010**
(21) Application number: 06113579.4
(22) Date of filing: 05.05.2006
(51) Int. Cl.: B66B 1/34, B66B 1/50, B66B 7/02

(54) **Arrangement for positioning magnets along sliding runners for lift cages**
Anordnung zur Magnetenpositionierung auf Führungsschienen für Aufzugskabinen
Arrangement pour le positionnement d'aimants le long de rails de guidage pour cabines d'ascenseur

(30) Priority: 27.05.2005 IT PN20050032
(43) Date of publication of application: 29.11.2006
(73) Proprietor: Stem S.r.l., 27010 Cura Carpignano (Pavia) (IT)
(72) Inventor: Moro, Simone, 27100 Pavia (IT); Moro, Fabio, 27100 Pavia (IT)
(74) Representative: Giugni, Valter

(56) References cited:
- EP-A- 0 765 836
- US-B1- 6 283 253
- PATENT ABSTRACTS OF JAPAN vol. 2002, no. 10, 10 October 2002 (2002-10-10) -& JP 2002 167133 A (TOSHIBA CORP), 11 June 2002 (2002-06-11)
- PATENT ABSTRACTS OF JAPAN vol. 003, no. 148 (M-083), 7 December 1979 (1979-12-07) -& JP 54 122546 A (HITACHI LTD), 22 September 1979 (1979-09-22)

## Description

The present invention refers to an arrangement for adjustably positioning magnets along the sliding runners for the sliding shoes of lift cages. An arrangement according to the preamble of claim 1 is already known e.g. from US-A-6283253.

Controlling the position of lift cages is currently based on the use of central switchboards, which are arranged to receive signals sent by magnetic sensors provided on the lift cage itself. These magnetic sensors are adapted to issue a change-of-state signal in the presence of a magnetic flux generated by a permanent magnet.

These magnets are generally situated on the sliding runners for the sliding shoes of the lift cage in suitably selected positions so as to prevent them from interfering with the same shoes.

Owing to them being made of ferromagnetic material, these runners provide an ideal support to the magnet, which is in fact capable to remain in its position by making use of the magnetic attraction force. There are generally two such sliding runners provided for each lift cage, which, owing to the shape thereof, i.e. T-shaped beams, enable magnets to be positioned there in such number as to allow the required signals to be provided to four sensors at most.

A large majority of all switchboards used in the control systems of lifts, however, requires that at least five sensors be used in each lift installation, and in many cases this number may even be greater than that.

The need therefore arises for the magnets that cannot be placed on the runners, i.e. do not find any place for mounting thereon, to be duly positioned. This need is even intensified in those cases in which the position of the magnets falls to coincide with the position of the connecting or batten plates used to join adjacent end portions of runner modules with each other. These plates are fastened to the modules by means of a number of screws and related bolts, which therefore practically prevent the magnets from being positioned on the runner.

At the present time, each switchboard manufacturer or installer makes use of specially provided supports that are capable of being attached to the runners and enable the magnets to be positioned at partly preestablished distances.

These supports, however, have a major drawback in that they are designed and made for use in connection with sliding runners of a given width (runners of various different widths are currently available on the market, actually) and, therefore, they cannot be used with runners of a different size, so that these supports are scarcely versatile in practical use and hardly re-usable.

Another drawback of these prior-art supports lies in the fact that they are also scarcely functional, since they do not allow the magnets to be adjusted in their position.

Yet another drawback of prior-art magnet supports lies in the fact that they prove quite difficult and awkward to mount onto the runners, in particular at sites where the connecting or batten plates lie.

It is therefore a main object of the present invention to provide an arrangement for positioning magnets along the sliding runners of lift cages, which is effective in doing away with the drawbacks and limitations of prior-art solutions as cited above.

Within this general object, it is a purpose of the present invention to provide an arrangement that is capable of being adapted to runners of all kinds and sizes without distinction, while enabling a plurality of magnets to be positioned at adjustable distances, even at sites where the connecting plates of runner modules lie.

Another purpose of the present invention is to provide an arrangement that is capable of being secured to runners of all kinds in a quick and simple manner.

Still another purpose of the present invention is to provide an arrangement that is simple in its construction and reliable in its use, as well as capable of being manufactured at fully competitive costs.

According to the present invention, these aims, along with further ones that will be apparent from the following description, are reached in an arrangement incorporating the features and characteristics as recited in the appended claims 1 et seq.

Features and advantages of the present invention will anyway be more readily understood from the description of a preferred, although not sole embodiment that is given below by way of non-limiting example with reference to the accompanying drawings, in which:

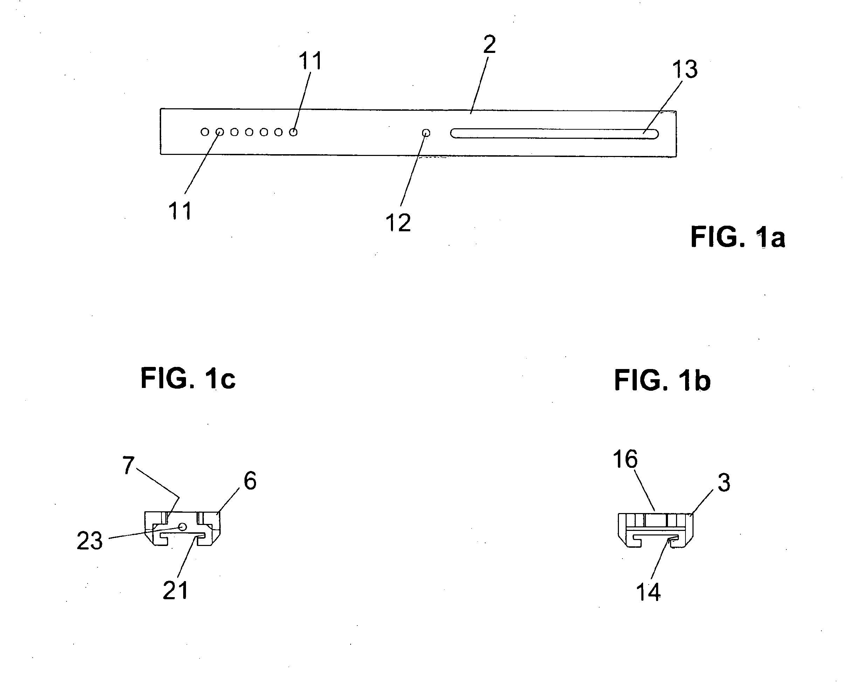

- Figure 1A is a front elevational view of the bar of an arrangement according to the present invention;
- Figure 1B is a side elevational view of the first clamp of an arrangement according to the present invention;
- Figure 1C is a side elevational view of the second clamp of an arrangement according to the present invention;

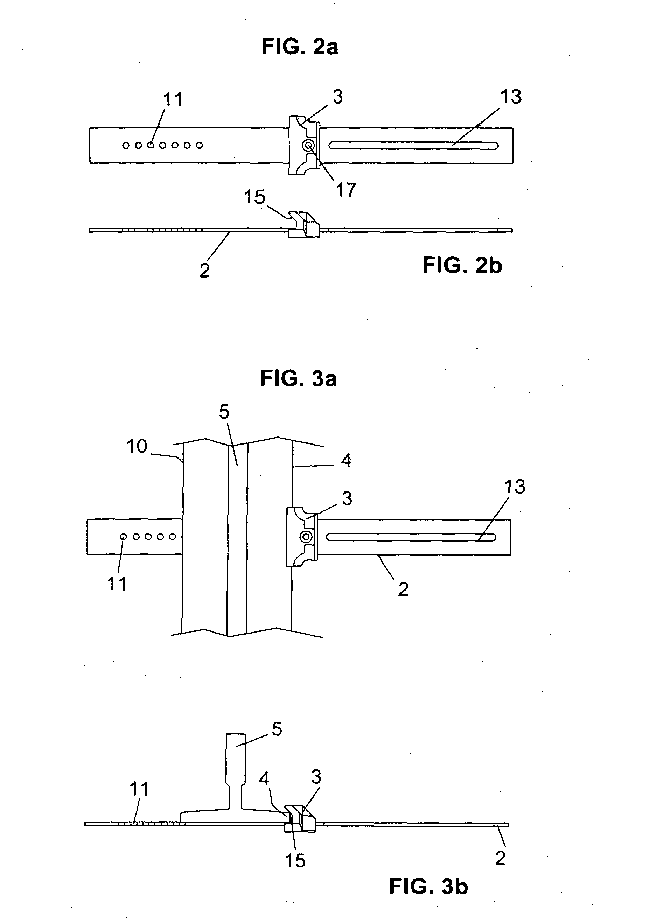

- Figure 2A is a front elevational view of the first clamp secured to the bar;
- Figure 2B is a top view of the same item shown in Figure 2A;
- Figure 3A is a front elevational view of the bar with the first clamp associated to the runner;
- Figure 3B is a top view of the same item shown in Figure 3A;

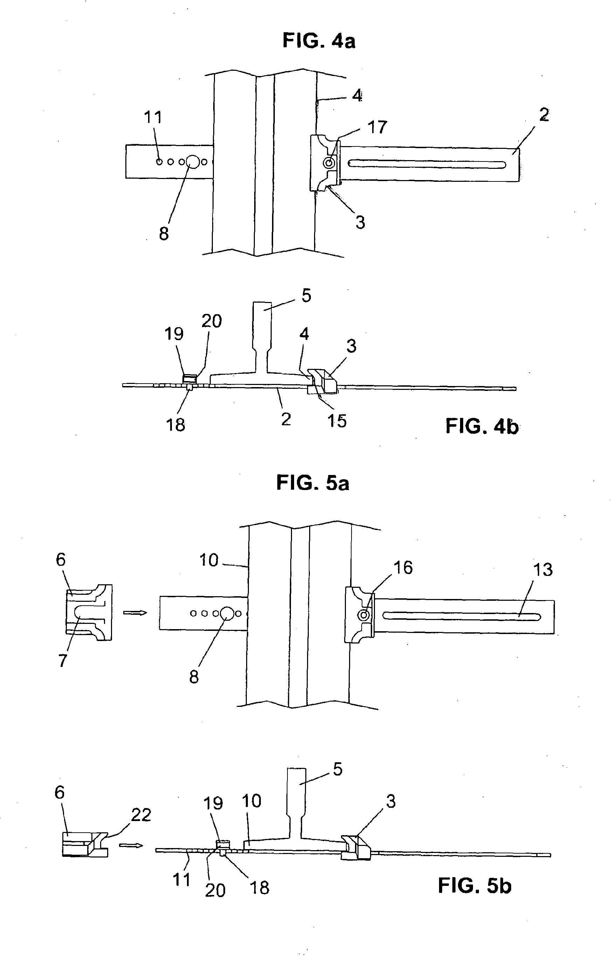

- Figure 4A is a same view as the one of Figure 3A, however with the check pin mounted on the bar;
- Figure 5A is a front elevational view illustrating in particular the second clamp in an assembling phase of the arrangement according to the present invention;
- Figure 5B is a top view of the same item shown in Figure 5A;

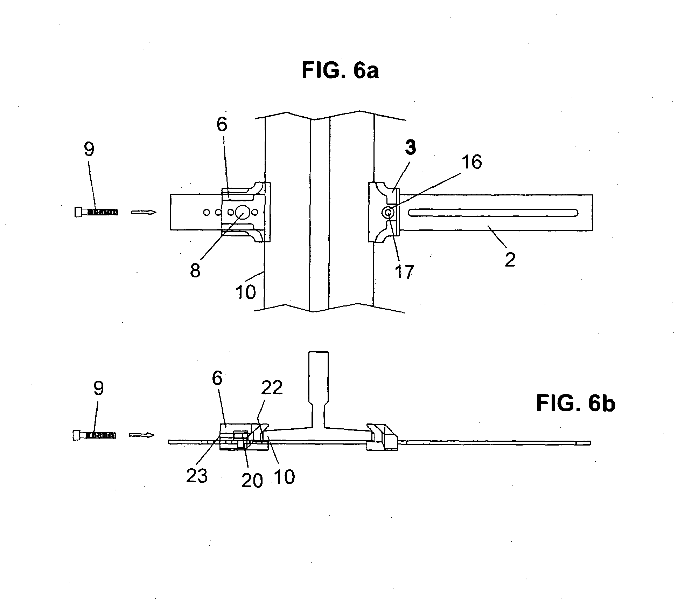

- Figure 6A is a front elevational view illustrating in particular the second clamp in the state in which it engages the check pin and abuts against the second edge of the runner;
- Figure 6B is a top view of the same item shown in Figure 6A;

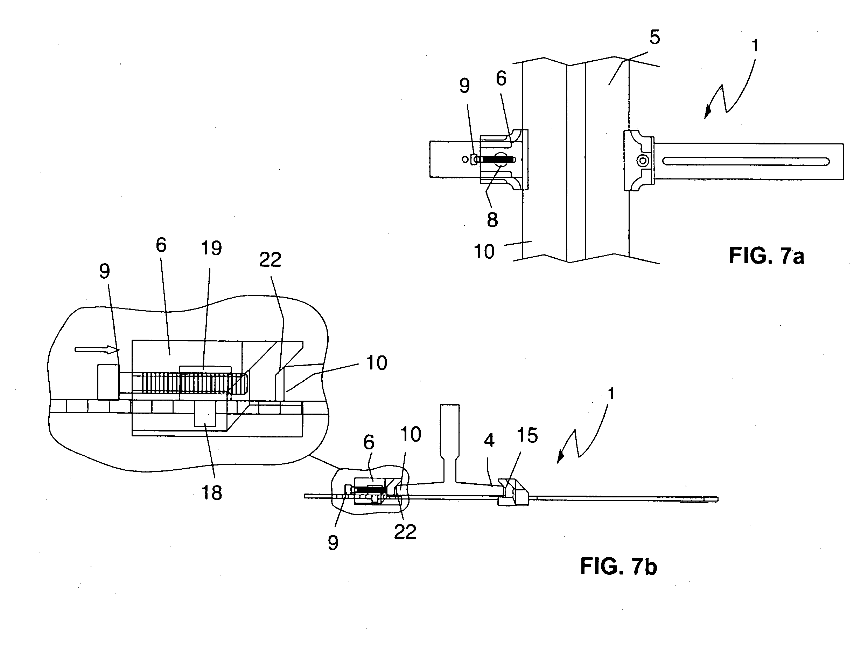

- Figure 7A is a front elevational view of the arrangement according to the present invention, as assembled and secured to the runner;
- Figure 7B is a top view of the same item shown in Figure 7A;
- Figure 8A is a front elevational view of a support member associated to the arrangement according to the present invention;
- Figure 8B is a top view of the same item shown in Figure 8A;
- Figure 9 is a front elevational view of a plurality of support members associated in different positions to the arrangement according to the present invention;
- Figure 10A is a front elevational view of a pair of arrangements according to the present invention, including the related support members, in an arrangement forming a track extending parallel to the runner;
- Figure 10B is a top view of the same item shown in Figure 10A;
- Figure 10C is a side elevational view of the same item shown in Figure 10A, illustrating in particular the support members joined with each other by means of a connecting member.

With reference to the above-cited Figures, an arrangement according to the present invention for positioning magnets along sliding runners for lift cages, as indicated generally at 1 in the Figures, comprises:
- a bar 2 adapted to support magnets and comprising a first clamp 3 adapted to engage a first edge 4 of a sliding runner 5 for lift cages,
- a second clamp 6 adapted to slide lengthwise along the bar 2 and comprising a longitudinal groove 7,
- a check pin 8 adapted to be selectively associated to the bar 2 in any one of a plurality of longitudinally spaced positions, this pin 8 being adapted to slidably engage the longitudinal groove 7,
- securing means 9 adapted to engage the second clamp 6 and the pin 8 to longitudinally lock the second clamp 6 against a second edge 10 of said runner 5.

In the particular embodiment of the present invention being described by way of example, the bar 2 comprises a plurality of adjustment perforations 11, which are spaced at pre-determined distances from each other and are intended to receive the check pin 8, and a centering aperture 12. The bar 2 defines a portion intended for the magnets to be positioned there and comprising a slot 13, as this shall be described in greater detail further on.

The first clamp 3 comprises a first C-shaped section 14 adapted to engage the bar, and a first clamping edge 15 with a conical section adapted to engage the first edge 4 of the runner 5.

Provided further in the first clamp 3 there is a through-bore 16 adapted to be engaged by a screw-like member 17 to secure the first clamp 3 to the bar 2 in correspondence to the centering aperture 12.

The check pin 8 comprises a stem 18 adapted to be inserted in one of the adjustment perforations 11, according to the crosswise size of the runner 5, and a head 19 provided with a threaded bore 20.

The second clamp 6 comprises a second C-shaped section 21 adapted to slidably engage the bar 2 along the lengthwise extension thereof, and a second clamping edge 22 with a conical section adapted to engage the second edge 10 of the runner 5.

The second clamp 6 defines the longitudinal groove 7 adapted to engage the head 19 of the check pin 8, so as to determine a locking position of the second clamp 6 fitting the size of the runner 5. The securing means 9 comprise a screw adapted to engage a through-bore 23, which is provided in the second clamp 6 in correspondence to the longitudinal groove 7, and to couple to the threaded bore 20 of the check pin 8, in such manner as to secure the second clamp 6 against the second edge 10 of the runner 5 and lock the bar 2 adapted to support the magnets in position.

The arrangement according to the present invention calls further for the use of a support member 24 capable of being attached to the bar 2 in correspondence to the slot 13 and adapted to support a magnet. This support member 24 comprises a plurality of perforations 25 - in the number of three in the described example - to allow for different positions at which the support member 24 itself may be attached - by means of appropriate screws - relative to the bar 2. At each one of these perforations 25, the support member 24 defines a seat 26 adapted to engage the bar 2 so as to allow the support member 24 to be correctly positioned vertically. Advantageously, the support member 24 comprises a portion of ferrous steel, adapted to magnetically lock and retain the magnets, and a co-moulded plastic portion for attachment to the bar 2.

The way in which the above-described arrangement works is as follows.

The first clamp 3 is brought to a position corresponding to the centering aperture 12, where it is then secured to the bar 2 by means of a screw. The thus formed assembly is then positioned on a runner 5 of any size whatsoever, in such manner that the first clamping edge 15 of the first clamp 3 engages the first edge 4 of the runner 5. Depending on the width of the runner 5, the check pin 8 is inserted in one of the adjustment perforations 11, at the side of the runner and adjacent to the second edge 10 of the runner 5. The second clamp 6 is caused to slide along the bar 2 up to the check pin 8. This causes the longitudinal groove 7 to slidably engage the head 19 of the pin 8, while the second clamping edge 22 moves into abutment against the second edge 10 of the runner 5, thereby engaging the latter. The securing means 9 are then let through the bore 23 in the second clamp 6 and screwed into the threaded bore 20 in the check pin 8, so as to lock the second clamp 6 against the runner, thereby firmly joining the arrangement 1 to the same runner.

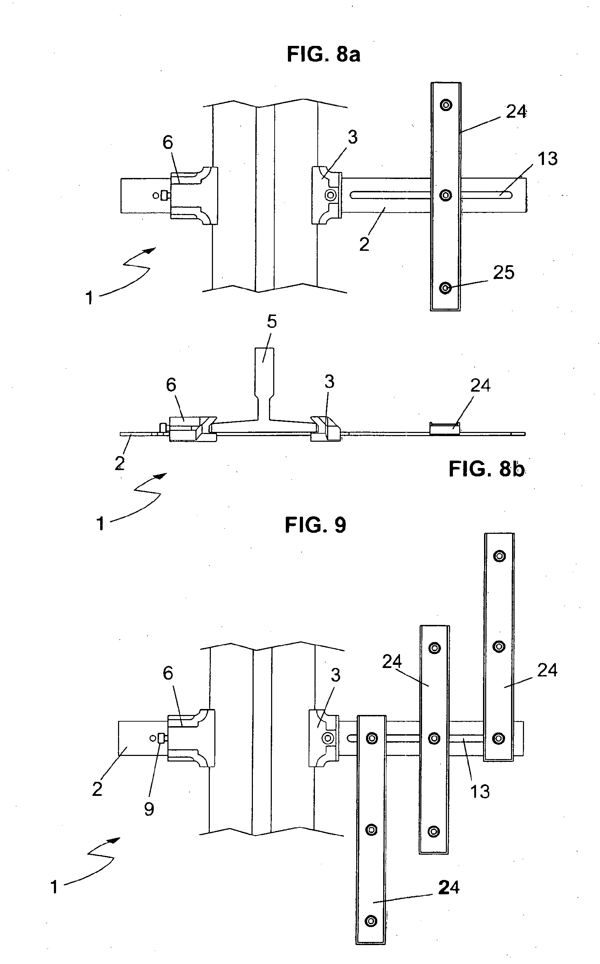

In the slot 13 in the bar 2 there can be mounted a support member 24 at a variable distance from the runner 5 according to the needs or requirements; a magnet can then be attached magnetically on this support member 24. Advantageously, several support members 24 can be attached to the bar 2, each one of them at a respective different height relative to the slot 13, as this is best shown in Figure 9.

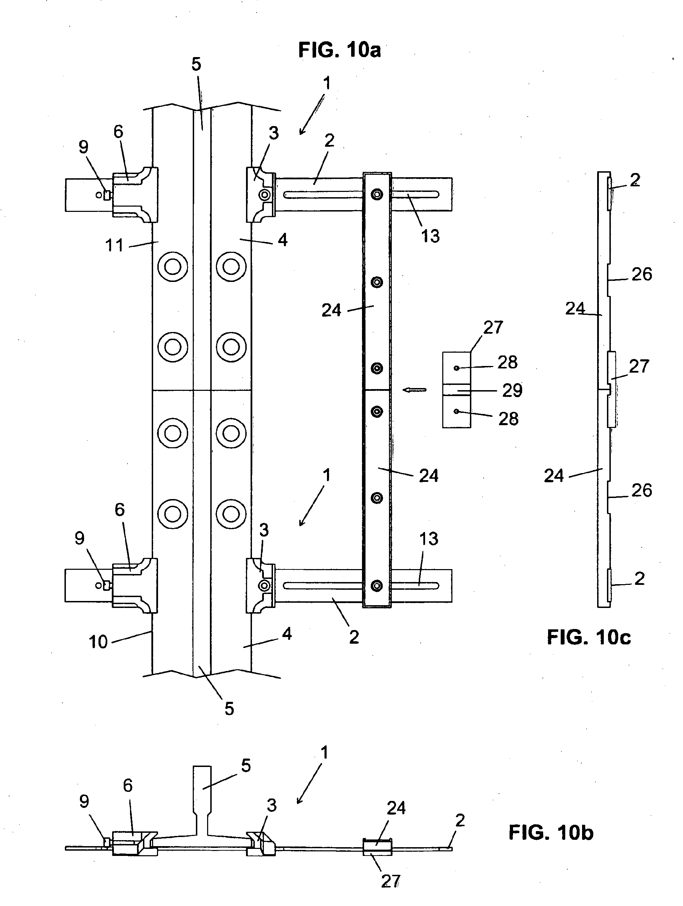

Furthermore, in correspondence to the joining sites of the runners 5, where fastening bolts are therefore encountered that make it practically impossible for magnets to be positioned there, it may prove advantageous for two arrangements according to the present invention to be associated to the runners, i.e. one arrangement upstream of and one arrangement downstream of these joining sites, so that the support members 24 that are applied to such arrangements will form a continuous track extending parallel to the runner 5 for the magnets to be attached thereon, as this is best shown in Figure 10A.

Connecting members 27 are provided to rigidly join the support members 24 being so aligned along the runner 5. Each such connecting member 27 is provided with through-bores 28 and grooves 29 that are adapted to couple with the perforations 25 and the seats 26 of the support members 24, so as to firmly associate the adjacent end portions of the support members 24 to each other.

Fully apparent from the above description is therefore the ability of the the present invention to effectively reach the afore cited aims and advantages by providing an arrangement that enables magnets to be positioned in a particularly simple and quick manner along any kind and type whatsoever of sliding runners for lift cages currently available and used on the market.

A major advantage of the arrangement according to present invention lies in its being particularly simple from a construction point of view, extremely reliable in use, as well as easy and quick to be installed on the runners.

The position of the magnets can be selected to most fittingly comply with the actual needs. In addition, several support members 24 can be mounted on a single arrangement, even at differing heights relative to each other. Furthermore, the possibility for more than just a single arrangement to be used in conjunction enables the problems created by the presence of connecting or batten plates along the runners, where the fastening bolts make it practically impossible to position magnets, to be solved.

It shall be appreciated that the arrangement according to the present invention is subject to a number of modifications and may be embodied in a number of different manners without departing from the scope of the present invention as defined in the appended claims. Moreover, all items and details as described above may be replaced by technically equivalent ones.

It should be also appreciated the materials used, as well as the sizing thereof, may each time be selected so as to more appropriately meet the particular requirements or suit the particular application.

## Claims

1. Arrangement for positioning magnets along sliding runners for lift cages, comprising :
- a bar (2) adapted to support magnets and comprising a first clamp (3) adapted to engage a first edge (4) of a sliding runner (5) for lift cages, and
- a second clamp (6) adapted to slide lengthwise along the bar (2), **characterized in that** said second clamp comprises a longitudinal groove (7), said arrangement further comprising
- a check pin (8) adapted to be selectively associated to said bar (2) in any one of a plurality of longitudinally spaced positions, said pin (8) being adapted to slidably engage said longitudinal groove (7),
- securing means (9) adapted to engage said second clamp (6) and said pin (8) to longitudinally lock said second clamp (6) against a second edge (10) of said runner (5).

2. Arrangement according to claim 1, **characterized in that** said bar (2) comprises a plurality of adjustment perforations (11), which are spaced at pre-determined distances from each other and are intended to receive the check pin (8).

3. Arrangement according to claim 2, **characterized in that** said check pin (8) comprises a stem (18) adapted to be inserted in one of the adjustment perforations (11), and a head (19) provided with a threaded bore (20) adapted to engage the longitudinal groove (7).

4. Arrangement according to claim 1, **characterized in that** said first clamp (3) comprises a first C-shaped section (14) adapted to engage the bar, and a first clamping edge (15) with a conical section adapted to engage the first edge (4) of the runner (5).

5. Arrangement according to claim 1, **characterized in that** said second clamp (6) comprises a second C-shaped section (21) adapted to slidably engage the bar (2), and a second clamping edge (22) with a conical section adapted to engage the second edge (10) of the runner (5).

6. Arrangement according to claim 3, **characterized in that** said securing means (9) are adapted to engage a through-bore (23), which is provided in the second clamp (6) in correspondence to the longitudinal groove (7), and to couple to the threaded bore (20) of the check pin (8), in such manner as to secure and lock the second clamp (6) against the second edge (10) of the runner (5).

7. Arrangement according to any of the preceding claims, **characterized in that** it comprises at least a support member (24) capable of being attached to the bar (2) in correspondence to a slot (13) provided in said bar (2), this support member (24) being adapted to magnetically lock and retain a magnet.

## Patentansprüche

1. Anordnung zur Positionierung von Magneten entlang Gleitlaufschienen für Aufzugskabinen, aufweisend:
- einen Stab (2), der ausgebildet ist, um Magneten zu tragen, und der eine erste Klemmeinrichtung (3) aufweist, die ausgebildet ist, um mit einer ersten Kante (4) einer Gleitlaufschiene (5) für Aufzugskabinen in Eingriff zu kommen, und
- eine zweite Klemmeinrichtung (6), die ausgebildet ist, um in Längsrichtung entlang des Stabes (2) gleitend bewegt zu werden, **dadurch gekennzeichnet, dass** diese zweite Klemmeinrichtung eine Längsnut (7) aufweist, wobei die Anordnung weiter aufweist:
- einen Sperrstift (8), der ausgebildet ist, um mit dem Stab (2) in einer beliebigen von einer Mehrzahl von in Längsrichtung beabstandeten Positionen wahlweise verbunden zu werden, wobei der Stift (8) ausgebildet ist, um mit der Längsnut (7) gleitend beweglich in Eingriff gebracht zu werden,
- eine Befestigungseinrichtung (9), die ausgebildet ist, um mit der zweiten Klemmeinrichtung (6) und dem Stift (8) in Eingriff zu kommen, um die zweite Klemmeinrichtung (6) gegen eine zweite Kante (10) der Laufschiene (2) zu verriegeln.

2. Anordnung nach Anspruch 1, **dadurch gekennzeichnet, dass** der Stab (2) eine Mehrzahl von Justierlöchern (11) aufweist, die in vorbestimmten Abständen voneinander angeordnet sind und dazu dienen sollen, den Sperrstift (8) aufzunehmen.

3. Anordnung nach Anspruch 2, **dadurch gekennzeichnet, dass** der Sperrstift (8) einen Schaft (18) aufweist, der ausgebildet ist, in eines der Justierlöcher (11) eingeführt zu werden, und einen Kopf (19) aufweist, der mit einer Gewindebohrung (20) versehen ist und ausgebildet ist, um mit der Längsnut (7) in Eingriff zu kommen.

4. Anordnung nach Anspruch 1, **dadurch gekennzeichnet, dass** die erste Klemmeinrichtung (3) einen ersten C-förmigen Querschnitt (14), der ausgebildet ist, um mit dem Stab in Eingriff zu kommen, und eine erste Klemmkante (15) mit konischem Querschnitt aufweist, die ausgebildet ist, um mit der ersten Kante (4) der Laufschiene (5) in Eingriff zu kommen.

5. Anordnung nach Anspruch 1, **dadurch gekennzeichnet, dass** die zweite Klemmeinrichtung (6) einen zweiten C-förmigen Querschnitt (21), der ausgebildet ist, um mit dem Stab (2) gleitend verschieblich in Eingriff zu kommen, und eine zweite Klemmkante (22) mit konischem Querschnitt aufweist, die ausgebildet ist, um mit der zweiten Kante (10) der Laufschiene (5) in Eingriff zu kommen.

6. Anordnung nach Anspruch 3, **dadurch gekennzeichnet, dass** die Befestigungseinrichtungen (9) ausgebildet sind, um mit einer Durchgangsbohrung (23) in Eingriff zu kommen, die in der zweiten Klemmeinrichtung (6) in Entsprechung zur Längsnut (7) vorgesehen ist, und mit der Gewindebohrung (20) des Sperrstiftes (8) verbunden zu werden, derart, dass die zweite Klemmeinrichtung (6) gegen die zweite Kante (10) der Laufschiene (5) befestigt und verriegelt wird.

7. Anordnung nach einem der vorhergehenden Ansprüche, **dadurch gekennzeichnet, dass** sie mindestens ein Tragelement (24) aufweist, das fähig ist, am Stab (2) befestigt zu werden, und zwar entsprechend einem Schlitz (13), der in dem Stab (2) vorgesehen ist, wobei dieses Tragelement (24) ausgebildet ist, einen Magneten magnetisch zu verriegeln und zurückzuhalten.

## Revendications

1. Agencement pour le positionnement d'aimants le long de rails de guidage pour cabines d'ascenseur, comprenant :
- une barre (2) adaptée pour supporter des aimants et comprenant une première pince (3) adaptée pour venir en prise avec un premier bord (4) d'un rail de guidage (5) pour cabine d'ascenseur, et
- une seconde pince (6) adaptée pour coulisser longitudinalement le long de la barre (2), **caractérisé en ce que**
ladite seconde pince comprend une gorge longitudinale, ledit agencement comprenant en outre
- un pion de contrôle (8) adapté pour être associé sélectivement à ladite barre (2) dans l'une quelconque d'une pluralité de positions longitudinalement espacées, ledit pion (8) étant adapté pour venir en prise de façon coulissante avec ladite gorge longitudinale (7),
- des moyens de fixation (9) adaptés pour venir en prise avec ladite seconde pince (6) et ledit pion (8) pour verrouiller longitudinalement ladite seconde pince (6) contre un second bord (10) dudit rail de guidage (5).

2. Agencement selon la revendication 1, **caractérisé en ce que** ladite barre (2) comprend une pluralité de perforations d'ajustement (11), qui sont espacées à des distances prédéterminées les unes des autres et sont destinées à recevoir le pion de contrôle (8).

3. Agencement selon la revendication 2, **caractérisé en ce que** ledit pion de contrôle (8) comprend une tige (18) adaptée pour être insérée dans l'une des perforations d'ajustement (11), et une tête (19) pourvue d'un alésage fileté (20) adapté pour venir en prise avec la gorge longitudinale (7).

4. Agencement selon la revendication 1, **caractérisé en ce que** ladite première pince (3) comprend une première section en forme de C (14) adaptée pour venir en prise avec la barre, et un premier bord de pincement (15) avec une section conique adapté pour venir en prise avec le premier bord (4) du rail (5).

5. Agencement selon la revendication 1, **caractérisé en ce que** ladite seconde pince (6) comprend une seconde section en forme de C (21) adaptée pour venir en prise avec la barre (2) de façon coulissante, et un second bord de pincement (22) avec une section conique adapté pour venir en prise avec le second bord (10) du rail (5).

6. Agencement selon la revendication 3, **caractérisé en ce que** lesdits moyens de fixation (9) sont adaptés pour venir en prise avec un trou traversant (23), qui est prévu dans la seconde pince (6) en correspondance avec la gorge longitudinale (7), et pour s'accoupler avec l'alésage fileté (20) du pion de contrôle (8), de telle manière à fixer et verrouiller la seconde pince (6) contre le second bord (10) du rail (5).

7. Agencement selon l'une quelconque des revendications précédentes, **caractérisé en ce qu'**il comprend au moins un élément de support (24) capable d'être fixé à la barre (2) en correspondance avec une fente (13) prévue dans ladite barre (2), cet élément de support (24) étant adapté pour verrouiller magnétiquement et retenir un aimant.
